Europäisches Patentamt

European Patent Office

Office européen des brevets

(19)

(11) **EP 1 095 851 B1**

(12) **FASCICULE DE BREVET EUROPEEN**

(45) Date de publication et mention
de la délivrance du brevet:
**25.02.2004 Bulletin 2004/09**

(51) Int Cl.⁷: **B64D 47/08**, F16B 1/00,
F16F 15/00, F41G 3/22,
G02B 27/64

(21) Numéro de dépôt: **00402790.0**

(22) Date de dépôt: **10.10.2000**

(54) **Dispositif de suspension pour relier un moyen de visée à la structure d'un véhicule, notamment un aéronef à voilure tournante**

Aufhängungsvorrichtung zum Verbinden einer Sichteinrichtung mit einem Fahrzeug, insbesondere mit einem Drehflügler

Suspension device for linking a sight means to a vehicle's structure, particularly for a rotorcraft

(84) Etats contractants désignés:
**AT BE CH CY DE DK ES FI FR GB GR IE IT LI LU MC NL PT SE**

(30) Priorité: **25.10.1999 FR 9913276**

(43) Date de publication de la demande:
**02.05.2001 Bulletin 2001/18**

(73) Titulaire: **Aerospatiale Matra Missiles**
**75116 Paris (FR)**

(72) Inventeurs:
• **Durand, Francois**
**78114 Magny Les Hameaux (FR)**
• **Quechon, Sylvie**
**78460 Chevreuse (FR)**

• **Fontaine, Bernard**
**91140 Villebon sur Yvette (FR)**

(74) Mandataire: **Hauer, Bernard**
**Cabinet Bonnétat**
**29, Rue de Saint-Pétersbourg**
**75008 Paris (FR)**

(56) Documents cités:
**EP-A- 0 588 684          WO-A-98/16871**
**US-A- 3 829 659          US-A- 5 710 945**

• **OWEN R.G.; JONES D.I.; OWENS A.R.:
'Mechanical Design and Simulation of a
Microgravity Isolation Mount for Columbus'
JOURNAL OF SPACECRAFT AND ROCKETS
vol. 30, no. 4, 01 Juillet 1993, WASHINGTON DC,
USA, pages 502 - 508**

## Description

La présente invention concerne un dispositif de suspension pour relier un moyen de visée à la structure d'un véhicule.

Bien que non exclusivement, ledit dispositif de suspension est plus particulièrement destiné à être disposé entre la structure d'un aéronef à voilure tournante, notamment un hélicoptère, et un appareil de visée de cet hélicoptère, par exemple un viseur infrarouge, comprenant un tel moyen de visée.

On sait que les moyens de visée héliportés comme dans cette application préférée, sont soumis à d'importants phénomènes vibratoires dus notamment aux rotors respectivement principal et arrière, à leurs pales, à la transmission, au moteur, etc ..., ainsi qu'aux facteurs de charge variables de l'hélicoptère dus à ses trajectoires et auxquels est soumis ledit moyen de visée.

Aussi, lorsque l'appareil de visée est monté sur la structure de l'hélicoptère, l'influence de ces diverses sollicitations est préjudiciable à l'efficacité dudit appareil de visée. Cela se traduit bien souvent par une dégradation de la stabilisation par action directe des vibrations, notamment sur le gyroscope et les supports des ensembles optiques, par une dégradation du confort, puisque les vibrations sont alors transmises aux images restituées à l'opérateur de visée, et par une diminution de la fiabilité même de l'appareil, puisque notamment les capteurs optoélectroniques de cet appareil de visée sont soumis à des vibrations permanentes. De plus, les facteurs de charge correspondant aux accélérations de l'hélicoptère agissent également directement sur cet appareil de visée.

Le document EP-0 588 684 divulgue un dispositif de suspension susceptible de remédier à ces inconvénients. A cet effet, ce dispositif de suspension connue comporte :

- des première et seconde pièces conformées au moins approximativement en forme de plaques et susceptibles d'être fixées respectivement à ladite structure et audit appareil de visée ; et
- des moyens de suspension qui sont disposés entre lesdites première et seconde pièces et qui sont susceptibles d'absorber, d'une part, les déplacements linéaires relatifs entre lesdites première et seconde pièces le long des trois axes de référence de roulis, de tangage et de lacet dudit véhicule et, d'autre part, les débattements angulaires relatifs entre lesdites première et seconde pièces autour desdits trois axes de référence.

Ce dispositif de suspension connu constitue par conséquent une suspension "six axes", permettant de minimiser aussi bien les déplacements en translation sur les trois axes de référence du véhicule, que les débattements angulaires autour de ces axes, qui sont produits par les vibrations et les facteurs de charge.

Par conséquent, grâce à ce dispositif de suspension connu, on obtient une stabilisation de l'appareil de visée, ce qui permet notamment d'augmenter le confort visuel de l'opérateur utilisant cet appareil de visée et surtout d'augmenter la fiabilité dudit appareil. L'axe de visée peut donc être stabilisé sur une cible observée et n'est plus soumis aux déplacements et aux débattements précités.

Toutefois, cette stabilisation de l'axe de visée qui présente donc un avantage pour l'essentiel des utilisations envisagées (observation du territoire, observation et poursuite d'une cible, ...) peut toutefois devenir un handicap pour certaines applications particulières, voire même ne pas être adaptée du tout à ces applications.

En effet, il peut être utile ou même nécessaire, pour certaines applications particulières, précisées ci-dessous à titre d'exemple, de maintenir l'axe de visée dans une position déterminée par rapport à un axe de référence donné qui dépend de l'hélicoptère ou d'un équipement particulier dudit hélicoptère.

Pour ce type d'application, il est donc nécessaire, si l'opérateur, notamment le pilote de l'hélicoptère, ne veut pas ou ne peut pas effectuer l'observation à l'oeil nu, de prévoir un appareil de visée spécifique supplémentaire qui est fixé de façon appropriée à la structure de l'hélicoptère, ce qui augmente bien entendu le coût et l'encombrement et n'est pas pratique, puisque ledit opérateur doit alors surveiller deux appareils de visée différents.

La présente invention concerne un dispositif de suspension permettant de remédier à ces inconvénients.

A cet effet, selon l'invention, le dispositif de suspension pour relier un moyen de visée à la structure d'un véhicule, notamment un aéronef à voilure tournante, ledit dispositif de suspension comportant :

- des première et seconde pièces conformées au moins approximativement en forme de plaques et susceptibles d'être fixées respectivement à ladite structure et audit moyen de visée ; et
- des moyens de suspension qui sont disposés entre lesdites première et seconde pièces et qui sont susceptibles d'absorber, d'une part, les déplacements linéaires relatifs entre lesdites première et seconde pièces le long des trois axes de référence de roulis, de tangage et de lacet dudit véhicule et, d'autre part, les débattements angulaires relatifs entre lesdites première et seconde pièces autour desdits trois axes de référence,

est remarquable en ce qu'il comporte de plus :

- un système de verrouillage commandable, susceptible d'amener ledit dispositif de suspension dans l'une des deux positions suivantes :

. une position verrouillée, dans laquelle ledit système de verrouillage bloque, dans une position relative déterminée, lesdites première et seconde pièces l'une par rapport à l'autre et

. une position déverrouillée, dans laquelle ledit système de verrouillage libère les mouvements relatifs entre lesdites première et seconde pièces ; et

- des moyens de commande pour commander ledit système de verrouillage.

Ainsi, grâce à l'invention, le dispositif de suspension est susceptible d'assurer une double fonction, à savoir :

- une fonction de stabilisation usuelle, comme celle réalisée par exemple par le dispositif de suspension décrit dans le document EP-0 588 684 précité, permettant de stabiliser le moyen de visée par rapport à la structure ; et
- une fonction de solidarisation, permettant, grâce à l'action du système de verrouillage, de rendre le moyen de visée solidaire de la structure, des plans de référence respectifs du moyen de visée et de la structure étant ainsi rendus fixes, par exemple parallèles, l'un par rapport à l'autre.

De plus, grâce auxdits moyens de commande, il est possible de passer rapidement d'une desdites positions (position verrouillée ou position déverrouillée) vers l'autre position. A cet effet, lesdits moyens de commande peuvent être actionnés, soit manuellement par un opérateur, soit automatiquement, par exemple en fonction de l'utilisation d'un autre équipement de l'hélicoptère qui est par exemple utilisé simultanément audit moyen de visée suspendu.

Selon l'invention, ledit système de verrouillage comporte au moins deux, de préférence trois, moyens de verrouillage, comme précisé ci-dessous.

Dans un mode de réalisation préféré, au moins l'un desdits moyens de verrouillage comprend :

- un premier élément fixé à l'une desdites première et seconde pièces, en regard de l'autre desdites pièces ;
- un deuxième élément au moins partiellement lié à ladite autre pièce et susceptible de coopérer avec ledit premier élément pour obtenir une liaison fixe entre lesdites première et seconde pièces, par l'intermédiaire desdits premier et deuxième éléments ; et
- un troisième élément commandable, susceptible d'amener lesdits premier et deuxième éléments en coopération, pour obtenir ladite position verrouillée, et susceptible de séparer l'un de l'autre lesdits premier et deuxième éléments, pour obtenir ladite position déverrouillée.

Dans le cadre de la présente invention, lesdits premier, deuxième et troisième éléments peuvent être réalisés de différentes manières.

Dans un premier mode de réalisation, ledit premier élément comprend un tenon, ledit deuxième élément comprend une pièce de centrage qui est fixée sur ladite autre pièce, en regard dudit tenon, et qui comporte une mortaise de forme adaptée audit tenon, et ledit troisième élément comprend un moyen susceptible de rapprocher lesdites deux pièces l'une de l'autre, afin d'amener ledit tenon dans ladite mortaise.

Dans un deuxième mode de réalisation, ledit premier élément comprend un logement, ledit deuxième élément comprend un axe mobile qui est susceptible d'être guidé par l'intermédiaire d'un guide fixé à ladite autre pièce et qui est susceptible de pénétrer dans ledit logement présentant une forme adaptée audit axe, et ledit troisième élément comprend un moyen susceptible de déplacer ledit axe mobile.

On notera que, dans ce dernier cas :

- dans une première variante, ledit système de verrouillage comporte deux moyens de verrouillage, pour l'un desquels la longueur de la partie du logement qui est susceptible de recevoir ledit axe est supérieure ou égale au double du diamètre dudit axe qui présente une section transversale circulaire ; et
- dans une seconde variante, ledit système de verrouillage comporte trois moyens de verrouillage semblables, pour chacun desquels la longueur de la partie du logement qui est susceptible de recevoir ledit axe est inférieure au double du diamètre dudit axe qui présente une section transversale circulaire.

En outre, dans un troisième mode de réalisation de l'invention, ledit premier élément comprend une sphère, ledit deuxième élément comprend au moins deux pièces mobiles conformées de manière à pouvoir emprisonner ladite sphère, et ledit troisième élément comprend un moyen susceptible de déplacer lesdites pièces mobiles.

De plus, dans un quatrième mode de réalisation, ledit premier élément comporte un axe présentant au moins une rainure annulaire sur sa face externe, ledit deuxième élément comprend un système à pince actionnable, comportant au moins quatre sphères susceptibles d'emprisonner ledit axe en agissant dans ladite rainure, de façon uniformément répartie autour de la périphérie dudit axe, et ledit troisième élément comporte un moyen susceptible d'actionner ledit système à pince.

On notera que, dans ce dernier cas :

- dans une première variante, ledit système de verrouillage comporte deux moyens de verrouillage semblables, pour chacun desquels l'axe comporte deux rainures annulaires et le système à pince comporte huit sphères, susceptibles d'agir par groupes de quatre sphères, respectivement dans lesdites deux rainures ; et

- dans une seconde variante, ledit système de verrouillage comporte trois moyens de verrouillage semblables, pour chacun desquels l'axe comporte une seule rainure annulaire et le système à pince comporte quatre sphères.

Finalement, selon l'invention :

- dans un cinquième mode de réalisation, ledit premier élément comporte une sphère, ledit deuxième élément comporte un système à pince actionnable susceptible d'emprisonner ladite sphère, et ledit troisième élément comporte un moyen susceptible d'actionner ledit système à pince ; et
- dans un sixième mode de réalisation, ledit premier élément comporte une pièce munie d'un double logement, ledit deuxième élément comporte un système à pince actionnable, les deux extrémités libres de ladite pince étant susceptibles d'agir respectivement dans ledit double logement, et ledit troisième élément comporte un moyen susceptible d'actionner ledit système à pince.

La présente invention concerne également un système de visée d'un véhicule, notamment un aéronef à voilure tournante, du type comportant :

- un appareil de visée comprenant un moyen de visée susceptible de prendre des images de l'environnement externe dudit véhicule et un moyen de restitution susceptible de restituer les images prises par ledit moyen de visée ; et
- un dispositif de suspension permettant de lier ledit moyen de visée à la structure dudit véhicule.

Selon l'invention, ce système de visée est remarquable en ce que ledit dispositif de suspension est un dispositif du type de celui spécifié ci-dessus, et en ce que ledit système de visée présente deux modes de visée différents :

- un mode de visée stabilisé, pour lequel ledit dispositif de suspension est amené dans la position déverrouillée précitée ; et
- un mode de visée fixe, pour lequel ledit dispositif de suspension est amené dans la position verrouillée précitée.

Ce système de visée présente donc deux modes de visée différents et complémentaires. Par conséquent, il n'est pas nécessaire d'utiliser deux systèmes de visée différents, pour mettre en oeuvre ces deux modes de visée.

La présente invention concerne également un système d'arme comportant, de façon connue :

- un véhicule, notamment un aéronef à voilure tournante ;
- une première unité d'arme montée sur ledit véhicule ; et
- un système de visée également monté sur ledit véhicule et susceptible de prendre des images de l'environnement dudit véhicule, au moins lors de l'utilisation de ladite première unité d'arme.

Cette première unité d'arme peut, par exemple, être un système connu de tir de missiles, par exemple des missiles guidés en alignement. Pour suivre et/ou guider de tels missiles, il est généralement particulièrement avantageux, voire nécessaire, d'utiliser un système de visée stabilisé, surtout lorsque le véhicule de tir est soumis à de nombreuses et fortes vibrations, comme cela est par exemple le cas pour un hélicoptère.

En revanche, on sait que pour d'autres unités d'arme connues, par exemple des systèmes de tir canon ou de tir de projectiles divers (obus, balles, roquettes, ...), si l'opérateur de tir utilise un système de visée, il est impératif que l'axe de visée de ce dernier soit fixe, de préférence parallèle, par rapport à l'axe de tir dudit système de tir canon (ou de tir de projectiles).

En effet, si l'axe de visée du système de visée, au lieu d'être fixe, était stabilisé sur une cible, l'axe de tir du système de tir canon (qui est solidaire de la structure du véhicule et qui est donc soumis à ses vibrations) serait décalé en permanence par rapport audit axe de visée (lors du tir sur ladite cible) de valeurs angulaires représentatives desdites vibrations.

Par conséquent, si on veut équiper le véhicule de deux unités d'arme différentes, c'est-à-dire nécessitant deux modes de visée différents, par exemple les unités d'arme précitées, il est nécessaire :

- soit de prévoir deux systèmes de visée adaptés auxdites unités d'arme différentes, ce qui est coûteux, encombrant et nécessite notamment deux écrans de restitution séparés, guère pratiques à surveiller ;
- soit d'actionner l'une des unités d'arme, par exemple le système de tir canon, sans utiliser de système de visée, en faisant la visée à l'oeil nu, ce qui est bien entendu peu précis et difficile, voire même impossible, à réaliser, notamment de nuit ou par temps de brouillard.

Pour remédier à ces inconvénients et pour permettre l'utilisation d'un seul système de visée pour deux unités d'arme nécessitant des modes de visée différents, par exemple un système de tir de missiles et un système de tir canon, le système d'arme du type précité est remarquable, selon l'invention, en ce que son système de visée est un système de visée conforme à l'invention, tel que décrit ci-dessus, et en ce qu'il est formé de manière à être amené automatiquement ou suite à un actionnement d'un opérateur :

- dans ledit mode de visée stabilisé, lorsque l'une desdites première et seconde unités d'arme est utilisée ; et
- dans ledit mode de visée fixe, lorsque l'autre desdites première et seconde unités d'arme est utilisée.

Par conséquent, grâce à l'invention, on obtient un système d'arme multifonctions, comportant un seul système de visée.

Les figures du dessin annexé feront bien comprendre comment l'invention peut être réalisée. Sur ces figures, des références identiques désignent des éléments semblables.

La figure 1 montre schématiquement un véhicule, sur lequel est monté un système de visée muni d'un dispositif de suspension conforme à l'invention.

La figure 2 montre schématiquement un dispositif de suspension conforme à l'invention.

Les figures 3 à 10 illustrent différents modes de réalisation d'un moyen de verrouillage d'un dispositif de suspension conforme à l'invention.

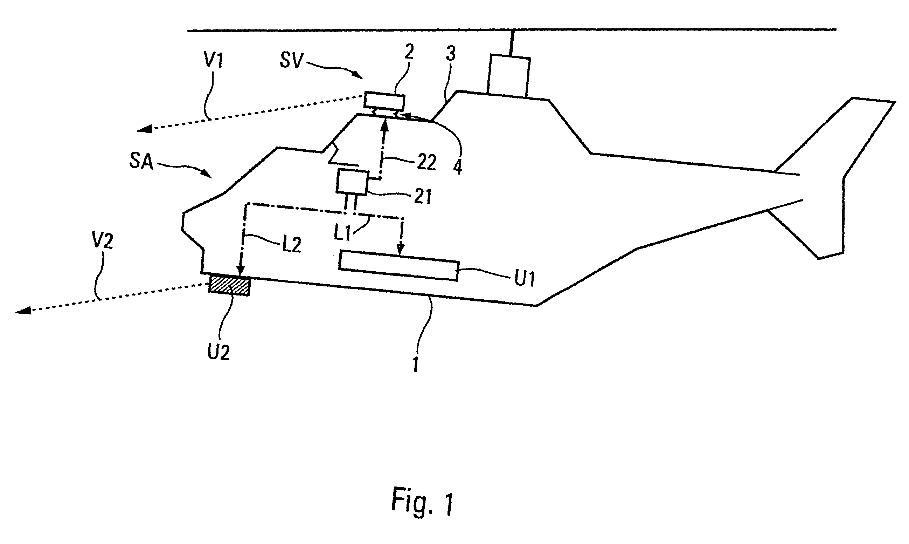

Le véhicule 1, en l'occurrence un hélicoptère, représenté schématiquement sur la figure 1, est pourvu d'un moyen de visée 2 d'un appareil de visée, précisé ci-dessous, qui est relié à la structure 3 dudit hélicoptère 1 par l'intermédiaire d'un dispositif de suspension 4 conforme à l'invention, permettant d'absorber les vibrations et mouvements rencontrés sur ce type d'aéronef à voilure tournante.

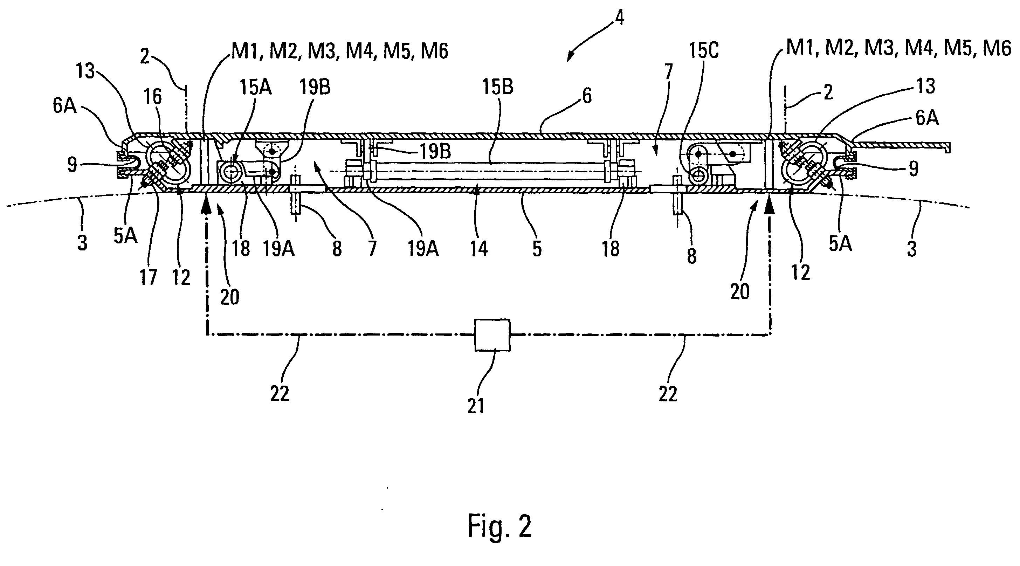

De façon connue (voir par exemple le document EP-0 588 684), ledit dispositif de suspension 4 comporte, comme représenté sur la figure 2 :

- deux pièces 5 et 6 conformées au moins approximativement en forme de plaques et fixées respectivement à ladite structure 3 et audit moyen de visée 2. A titre d'exemple, la pièce 5 est fixée à la structure 3 par l'intermédiaire de moyens 8, par exemple des boulons, tandis que la pièce 6 porte le moyen de visée 2 par des moyens de fixation connus et non représentés ; et
- des moyens de suspension 7 prévus entre les deux pièces de sorte que la pièce 6 recevant le moyen de visée 2 est suspendue par rapport à la pièce 5 fixée à la structure 3 du véhicule 1.

Le dispositif de suspension 4 comporte de plus, à titre d'exemple, un joint souple élastique 9 qui assure une liaison étanche entre des extrémités recourbées 5A et 6A desdites pièces 5 et 6.

De plus, lesdits moyens de suspension 7 comportent :

- d'une part, des organes amortisseurs 12 destinés à agir selon les trois axes de référence de roulis, de tangage et de lacet dudit véhicule 1, afin d'absorber les déplacements linéaires relatifs entre les pièces 5 et 6 le long desdits axes de référence. En l'occurrence, il s'agit d'absorber les déplacements linéaires de la pièce 6 et donc du moyen de visée suspendu 2, par rapport à la pièce 5 et donc à la structure 3 du véhicule 1 ; et

- d'autre part, des organes de suspension 14 destinés à agir autour desdits trois axes de référence, afin d'absorber les débattements relatifs entre les pièces 5 et 6 autour de ces axes de référence. En l'occurrence, il s'agit d'absorber les débattements de la pièce 6 et donc du moyen de visée suspendu 2, par rapport à la pièce 5 et donc à la structure 3 du véhicule 1.

A titre de réalisation préférée, lesdits organes amortisseurs 12 sont constitués par une pluralité de boucles fermées identiques 13 qui présentent une configuration oblongue et qui sont toutes contenues dans des plans orthogonaux au plan formé par les axes de référence de roulis et de tangage, correspondant à la pièce 5 fixe par rapport à la structure 3 de l'hélicoptère 1. Chaque boucle 13 est montée sur les pièces 5 et 6 par l'intermédiaire de supports spécifiques 16 et de boulons 17 dirigés selon le petit axe des boucles oblongues, perpendiculairement au grand axe.

Ces boucles fermées 13 sont au nombre de huit, par exemple, et elles sont équi-angulairement réparties les unes par rapport aux autres en formant par conséquence entre elles un angle de 45°. Structurellement, lesdites boucles 13 sont réalisées en une matière métallique, sous forme de câbles, assurant ainsi une bonne élasticité et un fort amortissement.

De plus, à titre de réalisation préférée, les organes de suspension élastiques 14 desdits moyens de suspension 7 sont formés par des barres de torsion, dont le but est d'empêcher les débattements angulaires autour des trois axes de référence de l'hélicoptère 1. Pour cela, trois barres de torsion dénommées alors anti-roulis 15A, anti-tangage 15B et anti-lacet 15C sont prévues pour agir autour des axes correspondants de l'hélicoptère 1 et absorber ainsi les débattements angulaires.

Chaque barre de torsion 15A, 15B et 15C est reliée :

- à la pièce 5, par l'intermédiaire de paliers à rotule 18 fixés à ladite pièce 5 ; et
- à la pièce 6, par l'intermédiaire de deux jeux de deux biellettes 19A et 19B chacun, articulées entre elles.

Selon l'invention, ledit dispositif de suspension 4 comporte de plus, comme représenté sur la figure 2 :

- un système de verrouillage 20 commandable, susceptible d'amener ledit dispositif de suspension 4 dans l'une des deux positions suivantes :

  . une position verrouillée, dans laquelle ledit système de verrouillage 20 bloque, dans une position relative déterminée, lesdites pièces 5 et 6 l'une par rapport à l'autre. De préférence, lesdites pièces 5 et 6 sont bloquées en étant parallèles l'une par rapport à l'autre ; et

. une position déverrouillée, dans laquelle ledit système de verrouillage 20 libère les mouvements relatifs entre lesdites pièces 5 et 6 ; et

- des moyens de commande 21 pour commander ledit système de verrouillage, comme illustré par des flèches 22 en traits mixtes.

Ainsi, grâce à l'invention, le dispositif de suspension 4 est susceptible d'assurer une double fonction, à savoir :

- une fonction de stabilisation usuelle, comme celle réalisée par exemple par le dispositif de suspension décrit dans le document EP-0 588 684 précité, permettant de stabiliser le moyen de visée 2 par rapport à la structure 3, sous l'action des moyens de suspension 7 ; et
- une fonction de solidarisation, permettant, grâce à l'action du système de verrouillage 20, de rendre le moyen de visée 2 solidaire de la structure 3, les plans de référence respectifs du moyen de visée 2 et de la structure 3 étant ainsi rendus fixes, de préférence parallèles, l'un par rapport à l'autre.Dans cette dernière position (position verrouillée), en raison du blocage réalisé, les moyens de suspension 7 sont inactifs.

De plus, grâce auxdits moyens de commande 21, il est possible de passer rapidement d'une desdites positions (position verrouillée ou position déverrouillée) vers l'autre. A cet effet, lesdits moyens de commande 21 peuvent être actionnés, soit manuellement par un opérateur, soit automatiquement, par exemple en fonction du type d'un autre équipement de l'hélicoptère qui est utilisé simultanément audit moyen de visée 2, comme précisé ci-dessous.

Selon l'invention, ledit système de verrouillage 20 comporte généralement trois moyens de verrouillage M1 à M6 précisés ci-dessous et agencés à des zones différentes entre lesdites pièces 5 et 6. En particulier, l'un de ces moyens de verrouillage peut être agencé sur l'axe longitudinal non représenté de la pièce 6 vers l'avant du moyen de visée 2 et les deux autres moyens de verrouillage peuvent être agencés de part et d'autre de cet axe longitudinal vers l'arrière du moyen de visée 2.

Toutefois, dans certains modes de réalisation particuliers, deux moyens de verrouillage peuvent être suffisants pour assurer la fonction de blocage précitée, comme précisé ci-dessous.

Selon l'invention, chacun desdits moyens de verrouillage M1 à M6 comprend :

- un premier élément E1 à E6 fixé à l'une 6 desdites pièces 5 et 6, en regard de l'autre 5 desdites pièces 5 et 6 ;
- un deuxième élément F1 à F6 au moins partiellement lié à ladite autre pièce 5 et susceptible de coopérer avec ledit premier élément E1 à E6 pour obtenir une liaison fixe entre lesdites pièces 5 et 6, par l'intermédiaire desdits premier et deuxième éléments ; et
- un troisième élément commandable G1 à G6, qui est susceptible d'être commandé par les moyens de commande 21, qui peut amener lesdits premier et deuxième éléments en coopération, pour obtenir ladite position verrouillée, et qui peut séparer l'un de l'autre lesdits premier et deuxième éléments, pour obtenir ladite position déverrouillée.

Dans le cadre de la présente invention, lesdits moyens de verrouillage peuvent être réalisés selon différents modes de réalisation M1 à M6 précisés ci-dessous.

On notera de plus qu'un système de verrouillage 20 peut comporter des moyens de verrouillage M1 à M6 de réalisations différentes.

De préférence, toutefois, un même système de verrouillage 20 comporte des moyens de verrouillage de même type, par exemple M2.

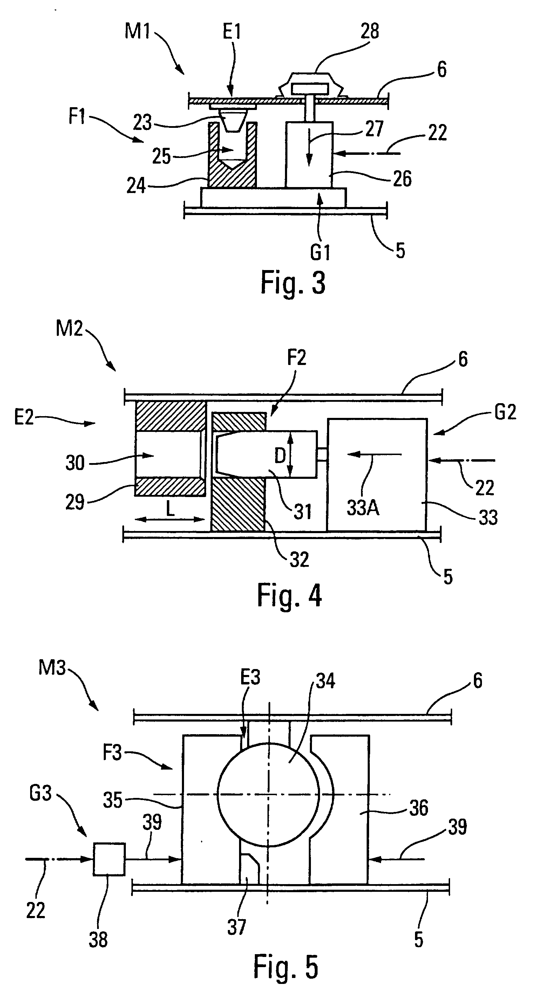

Dans un premier mode de réalisation représenté sur la figure 3, l'élément E1 du moyen de verrouillage M1 comprend un tenon 23 de forme conique, qui est fixé à la pièce 6, et l'élément F1 comprend une pièce de centrage 24 qui est fixée sur la pièce 5 et qui comprend une mortaise 25 de forme adaptée audit tenon 23.

De plus, l'élément G1 comprend un moyen 26, en l'occurrence un moyen de traction usuel, commandable comme illustré par la liaison 22, qui est susceptible de rapprocher la pièce 6 de la pièce 5, tel que montré par une flèche 27, pour amener ledit tenon 23 dans ladite mortaise 25. Ledit moyen 26 est recouvert sur la face externe de la pièce 6 par un soufflet d'étanchéité 28. Ce moyen commandable peut également être un moyen de pressage, de type usuel.

On notera que, pour un système de verrouillage 20 qui comporte trois moyens de verrouillage M1 de ce type, les trois moyens 26 attirent et bloquent la pièce 6 en position connue, imposée par les pièces de centrage 24. Cette pièce 6 supérieure est ainsi contrainte dans une position basse avec un centrage rendant impossible toute rotation.

Toutefois, il est possible de supprimer le centrage, lorsque la position en gisement n'est pas importante. Dans ce cas, la force d'appui sur la plaque 6 doit être suffisante pour maintenir celle-ci sur le plan de pose considéré. Elle doit vaincre l'effort nécessaire au déplacement de la suspension en position basse.

On remarquera en outre que :

- le moyen 26 peut également être fixé, par exemple par un crochet non représenté, à la face inférieure de la pièce 6 de sorte que le soufflet d'étanchéité 28 peut alors être supprimé ; et
- le tenon peut également être sphérique ou d'une autre forme appropriée.

Dans un deuxième mode de réalisation M2 représenté schématiquement sur la figure 4, l'élément E2 comporte une pièce 29 munie d'un logement 30 et l'élément F2 comporte un axe mobile 31, de diamètre D, qui est susceptible d'être guidé par l'intermédiaire d'un guide 32 fixé à la pièce 5 de manière à pouvoir pénétrer, au maximum sur une longueur L, dans ledit logement 30.

De plus, l'élément G2 comporte un moyen 33, par exemple un moteur électrique, qui est susceptible de déplacer ledit axe mobile 31, comme illustré par une flèche 33A.

Dans une première variante, ledit système de verrouillage 20 comporte deux moyens de verrouillage M2, dont les axes mobiles 31 respectifs sont agencés selon deux directions différentes, de préférence perpendiculaires, pour éviter tout déplacement linéaire dans le plan ainsi défini. De plus, l'un de ces moyens M2 présente un centrage dit "long", c'est-à-dire qui vérifie la relation suivante entre ladite longueur L et ledit diamètre D :

$$L / D \geq 2.$$

Dans une seconde variante, ledit système de verrouillage 20 comporte trois moyens de verrouillage M2 présentant chacun un centrage dit "court" ($L / D < 2$). De plus, les axes mobiles 31 d'au moins deux de ces moyens M2 sont agencés selon deux directions différentes, de préférence perpendiculaires.

Dans un troisième mode de réalisation M3 du moyen de verrouillage, représenté schématiquement sur la figure 5 :

- l'élément E3 comprend une sphère 34 ;
- l'élément F3 comporte au moins deux pièces mobiles 35 et 36 conformées, de préférence en forme de demi-coquilles, de manière à pouvoir emprisonner ladite sphère 34, ainsi qu'une butée 37 fixée sur la pièce 5 pour imposer une position déterminée à la pièce mobile 35, la pièce mobile 36 pressant et maintenant la sphère 34 entre ladite pièce mobile 35 ; et
- l'élément G3 comprend un moyen 38, par exemple un moteur électrique, susceptible de déplacer lesdites pièces mobiles 35 et 36, comme illustré par des flèches 39.

Ce troisième mode de réalisation est particulièrement efficace et ne présente, en particulier, aucun risque de coincement entre l'élément mobile (pièces 35 et 36) et l'élément fixe (sphère 34).

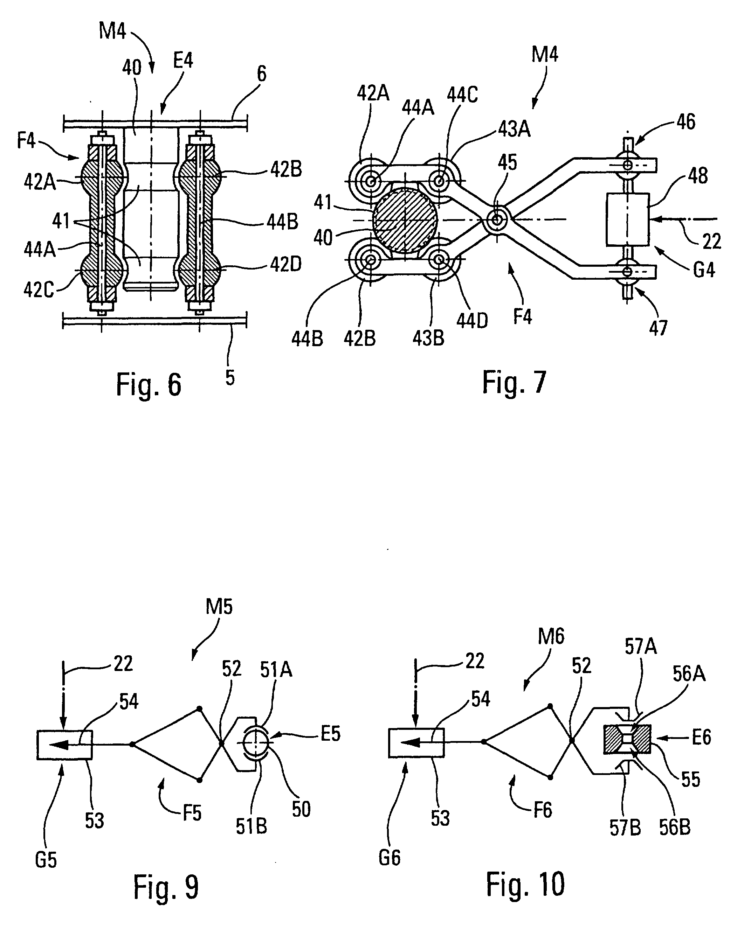

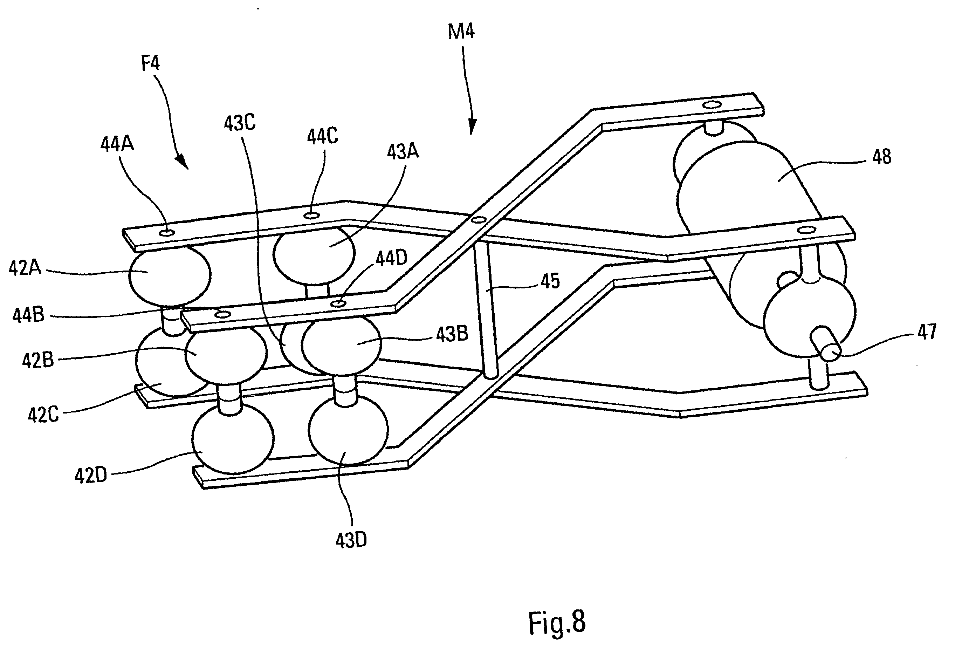

Par ailleurs, dans un quatrième mode de réalisation M4 du moyen de verrouillage, représenté schématiquement sur les figures 6, 7 et 8 :

- l'élément E4 comporte un axe 40 présentant, selon la variante considérée, une ou deux rainures annulaires 41, de préférence avec un évidement circulaire ;
- l'élément F4 comprend un système à pince actionnable, qui comporte à l'extrémité de pincement au moins quatre sphères 42A, 42B, 42C, 42D, 43A, 43B, 43C, 43D de préférence de même rayon que l'évidement circulaire de la rainure annulaire 41 et susceptibles d'emprisonner ledit axe 40 en agissant dans ladite rainure annulaire 41 de façon uniformément répartie autour de la périphérie dudit axe 40 ; et
- l'élément G4 comporte un moyen 48 susceptible d'actionner ledit système à pince F4.

De préférence, ledit moyen 48 est un dispositif d'entraînement en rotation, de type usuel, entraînant en rotation deux axes 46 et 47 qui présentent respectivement un filetage à droite et un filetage à gauche et qui sont montés dans des trous taraudés appropriés dudit système à pince F4. Ainsi, la rotation engendrée par le moyen 48 dans un sens permet de serrer les pinces qui sont articulées autour d'un axe 45, et la rotation en sens inverse entraîne l'ouverture desdites pinces, chacune de ces pinces comportant au moins deux sphères, comme représenté sur les figures 7 et 8.

L'axe 45 et le dispositif d'entraînement en rotation 48 sont de plus fixés sur la pièce 5.

On notera que la rainure annulaire peut présenter un évidement de forme autre que circulaire, par exemple de forme conique, lesdites sphères présentant de préférence un contour adapté à la forme dudit évidement.

Dans une première variante, le système de verrouillage 20 comporte deux moyens de verrouillage M4, chacun de ces moyens M4 comportant :

- un axe 40 présentant deux rainures 41 ; et
- un système à pince F4 comprenant huit sphères, susceptibles d'agir par groupes de quatre sphères, respectivement dans lesdites deux rainures. A cet effet, lesdites sphères sont liées deux à deux par des axes 44A, 44B, 44C, 44D, comme l'axe 44A qui lie les sphères 42A et 42C ou l'axe 44B qui lie les sphères 42B et 42D, tel que représenté sur la figure 6.

En outre, dans une seconde variante, ledit système de verrouillage 20 comporte trois moyens de verrouillage M4, chacun de ces moyens M4 comportant :

- un axe 40 qui ne présente qu'une seule rainure ; et
- un système à pince qui ne comprend que quatre sphères destinées à agir dans cette rainure unique.

Par ailleurs, dans un cinquième mode de réalisation M5 du moyen de verrouillage, représenté de façon très schématique sur la figure 9 :

- l'élément E5 comporte une sphère 50 fixée sur la pièce 6 ;
- l'élément F5 comprend un système à pince actionnable, comprenant deux bras dont les extrémités respectives 51 A et 51 B sont conformées de manière à pouvoir emprisonner ladite sphère. Ce système à pince est fixé par l'intermédiaire d'une articulation 52 sur la pièce 5 ; et
- l'élément G5 comprend un moyen 53 fixé sur la pièce 5, de préférence un moyen de traction, susceptible d'actionner le système à pince dans le sens illustré par une flèche 54, pour que ce dernier emprisonne ladite sphère.

Finalement, comme on peut le voir sur la figure 10, un sixième mode de réalisation M6 du moyen de verrouillage comporte :

- un élément G6 identique à l'élément G5 ;
- un élément E6 qui comprend une pièce 55 présentant deux logements 56A et 56B, de préférence coniques ; et
- un élément F6 qui est de même type que l'élément F5, à l'exception des extrémités 57A et 57B des bras qui sont formées de manière à pouvoir agir respectivement dans lesdits logements 56A et 56B de la pièce 55.

Concernant les modes de réalisation M1 à M6 précités, on notera que :

- les différents troisièmes éléments G1 à G6 peuvent bien entendu agir dans les deux sens, à la fois pour réaliser le verrouillage et pour réaliser le déverrouillage, bien que pour des raisons de simplification du dessin, on a à chaque fois illustré l'action de ces éléments en vue du verrouillage (flèches 27, 33A, 39, 54) ;
- il est envisageable de réaliser des commandes manuelles, et pas seulement des commandes automatiques ; et
- les différentes formes (coniques, sphériques, ...) d'au moins certains des premiers E1 à E6 et deuxièmes F1 à F6 éléments sont données à titre de réalisations préférées mais non limitatives. En effet, ce qui importe le plus, c'est que les formes respectives desdits premiers et deuxièmes éléments soient adaptées et complémentaires.

Le dispositif de suspension 4 conforme à l'invention et décrit précédemment, est particulièrement bien approprié à relier un moyen de visée 2 d'un appareil de visée à la structure 3 d'un hélicoptère 1, comme représenté sur la figure 1, de manière à former avec cet appareil de visée SV un système de visée conforme à l'invention, d'axe de visée V1.

De façon connue, un tel appareil de visée, par exemple un viseur infrarouge, comporte, en plus dudit moyen de visée 2 susceptible de prendre des images de l'environnement externe dudit hélicoptère 1, un moyen de restitution non représenté, par exemple un écran, notamment un écran "tête haute", susceptible de restituer à un opérateur, en particulier à un pilote de l'hélicoptère 1, les images prises par ledit moyen de visée 2.

Ainsi, grâce à l'invention, ledit système de visée SV présente deux modes de visée différents :

- un mode de visée stabilisé, pour lequel ledit dispositif de suspension 4 est amené dans la position déverrouillée ; et
- un mode de visée fixe, pour lequel ledit dispositif de suspension 4 est amené dans la position verrouillée.

Ce système de visée SV à double mode de visée peut notamment être intégré dans un système d'arme SA comportant de plus :

- un véhicule 1, notamment un hélicoptère, porteur dudit système de visée SV. Ce véhicule peut également être un char ou un autre véhicule militaire ;
- une première unité d'arme U1 montée sur ledit véhicule 1 ; et
- une seconde unité d'arme U2 également montée sur ledit véhicule 1.

Ces unités d'arme U1 et U2 sont telles que, concernant la visée lors d'un tir, l'une U1 de ces unités d'arme U1, U2, par exemple un système de tir de missiles, nécessite un mode de visée stabilisée, et l'autre unité d'arme U2, par exemple un système de tir canon, nécessite un mode de visée fixe, c'est-à-dire un mode de visée pour lequel l'axe de tir V2 de cette unité d'arme U2 et l'axe de visée V1 du système de visée SV soient stables l'un par rapport à l'autre, et de préférence parallèles.

Comme ledit système de visée SV peut mettre en oeuvre ces deux modes de visée différents (stabilisé/fixe), le système d'arme SA conforme à l'invention permet la mise en oeuvre de deux fonctions de tir différentes, avec un seul et même système de visée SV.

## Revendications

1. Dispositif de suspension pour relier un moyen de visée (2) à la structure (3) d'un véhicule (1), notamment un aéronef à voilure tournante, ledit dispositif de suspension (4) comportant :

- des première et seconde pièces (5, 6) conformées au moins approximativement en forme de plaques et susceptibles d'être fixées respectivement à ladite structure (3) et audit moyen de visée (2) ; et

- des moyens de suspension (7) qui sont disposés entre lesdites première et seconde pièces (5, 6) et qui sont susceptibles d'absorber, d'une part, les déplacements linéaires relatifs entre lesdites première et seconde pièces (5, 6) le long des trois axes de référence de roulis, de tangage et de lacet dudit véhicule et, d'autre part, les débattements angulaires relatifs entre lesdites première et seconde pièces (5, 6) autour desdits trois axes de référence,

**caractérisé en ce qu'**il comporte de plus :

- un système de verrouillage commandable (20) susceptible d'amener ledit dispositif de suspension (4) dans l'une des deux positions suivantes :

   . une position verrouillée, dans laquelle ledit système de verrouillage (20) bloque, dans une position relative déterminée, lesdites première et seconde pièces (5, 6) l'une par rapport à l'autre ; et

   . une position déverrouillée, dans laquelle ledit système de verrouillage (20) libère les mouvements relatifs entre lesdites première et seconde pièces (5, 6) ; et

- des moyens de commande (21) pour commander ledit système de verrouillage (20).

2. Dispositif selon la revendication 1,
**caractérisé en ce que** ledit système de verrouillage (20) comporte au moins deux moyens de verrouillage (M1, M2, M3, M4, M5, M6).

3. Dispositif selon la revendication 2,
**caractérisé en ce qu'**au moins l'un desdits moyens de verrouillage (M1 à M6) comprend :

- un premier élément (E1 à E6) fixé à l'une (6) desdites première et seconde pièces (5, 6), en regard de l'autre (5) desdites pièces (5, 6) ;
- un deuxième élément (F1 à F6) au moins partiellement lié à ladite autre pièce (5) et susceptible de coopérer avec ledit premier élément pour obtenir une liaison fixe entre lesdites première et seconde pièces (5, 6), par l'intermédiaire desdits premier et deuxième éléments ; et
- un troisième élément (G1 à G6) commandable, susceptible d'amener lesdits premier et deuxième éléments en coopération, pour obtenir ladite position verrouillée, et susceptible de séparer l'un de l'autre lesdits premier et deuxième éléments, pour obtenir ladite position déverrouillée.

4. Dispositif selon la revendication 3,
**caractérisé en ce que** ledit premier élément (E1) comprend un tenon (23), ledit deuxième élément (F1) comprend une pièce de centrage (24) qui est fixée sur ladite autre pièce (5) en regard dudit tenon (23) et qui comporte une mortaise (25) de forme adaptée audit tenon (23), et **en ce que** ledit troisième élément (G1) comprend un moyen (26) susceptible de rapprocher lesdites deux pièces (5, 6) l'une de l'autre, afin d'amener ledit tenon (23) dans ladite mortaise (25).

5. Dispositif selon la revendication 3,
**caractérisé en ce que** ledit premier élément (E2) comprend un logement (30), ledit deuxième élément (F2) comprend un axe mobile (31) qui est susceptible d'être guidé par l'intermédiaire d'un guide (32) fixé à ladite autre pièce (5) et qui est susceptible de pénétrer dans ledit logement (30) présentant une forme adaptée audit axe (31), et ledit troisième élément (G2) comprend un moyen (33) susceptible de déplacer ledit axe mobile (31).

6. Dispositif selon la revendication 5,
**caractérisé en ce que** ledit système de verrouillage (20) comporte deux moyens de verrouillage (M2), pour l'un desquels la longueur (L) de la partie du logement (30) qui est susceptible de recevoir ledit axe (31) est supérieure ou égale au double du diamètre (D) dudit axe (31) qui présente une section transversale circulaire.

7. Dispositif selon la revendication 5,
**caractérisé en ce que** ledit système de verrouillage (20) comporte trois moyens de verrouillage (M2) semblables, pour chacun desquels la longueur (L) de la partie du logement (30) qui est susceptible de recevoir ledit axe (31) est inférieure au double du diamètre (D) dudit axe (31) qui présente une section transversale circulaire.

8. Dispositif selon la revendication 3,
**caractérisé en ce que** ledit premier élément (E3) comprend une sphère (34), ledit deuxième élément (F3) comprend au moins deux pièces mobiles (35, 36) conformées de manière à pouvoir emprisonner ladite sphère (34), et **en ce que** ledit troisième élément (G3) comprend un moyen (38) susceptible de déplacer lesdites pièces mobiles (35, 36).

9. Dispositif selon la revendication 3,

**caractérisé en ce que** ledit premier élément (E4) comporte un axe (40) présentant au moins une rainure annulaire (41) sur sa face externe, **en ce que** ledit deuxième élément (F4) comprend un système à pince actionnable, comportant au moins quatre sphères (42A, 42B, 42C, 42D, 43A, 43B, 43C, 43D) susceptibles d'emprisonner ledit axe (40) en agissant dans ladite rainure (41), de façon uniformément répartie autour de la périphérie dudit axe (40), et **en ce que** ledit troisième élément (G4) comporte un moyen (48) susceptible d'actionner ledit système à pince.

10. Dispositif selon la revendication 9,
**caractérisé en ce que** ledit système de verrouillage (20) comporte deux moyens de verrouillage (M4) semblables, pour chacun desquels l'axe (40) comporte deux rainures annulaires (41) et le système à pince (F4) comporte huit sphères, susceptibles d'agir par groupes de quatre sphères, respectivement dans lesdites deux rainures (41).

11. Dispositif selon la revendication 9,
**caractérisé en ce que** ledit système de verrouillage (20) comporte trois moyens de verrouillage (M4) semblables, pour chacun desquels l'axe (40) comporte une seule rainure annulaire (41) et le système à pince (F4) comporte quatre sphères.

12. Dispositif selon la revendication 3,
**caractérisé en ce que** ledit premier élément (E5) comporte une sphère (50), **en ce que** ledit deuxième élément (F5) comporte un système à pince actionnable susceptible d'emprisonner ladite sphère (50), et **en ce que** ledit troisième élément (G5) comporte un moyen (53) susceptible d'actionner ledit système à pince (F5).

13. Dispositif selon la revendication 3,
**caractérisé en ce que** ledit premier élément (E6) comporte une pièce (55) munie d'un double logement (56A, 56B), **en ce que** ledit deuxième élément (F6) comporte un système à pince actionnable, les deux extrémités libres (57A, 57B) de ladite pince étant susceptibles d'agir respectivement dans ledit double logement (56A, 56B), et **en ce que** ledit troisième élément (G6) comporte un moyen (53) susceptible d'actionner ledit système à pince.

14. Système de visée d'un véhicule, notamment un aéronef à voilure tournante, ledit système de visée (SV) comportant :

- un appareil de visée comprenant un moyen de visée (2) susceptible de prendre des images de l'environnement externe dudit véhicule (1) et un moyen de restitution susceptible de restituer les images prises par ledit moyen de visée (2) ;

et

- un dispositif de suspension (4) permettant de lier ledit moyen de visée (2) à la structure (3) dudit véhicule,

**caractérisé en ce que** ledit dispositif de suspension (4) est un dispositif du type de celui spécifié sous l'une quelconque des revendications 1 à 13, et **en ce que** ledit système de visée (SV) présente deux modes de visée différents :

- un mode de visée stabilisé, pour lequel ledit dispositif de suspension (4) est amené dans la position déverrouillée ; et
- un mode de visée fixe, pour lequel ledit dispositif de suspension (4) est amené dans la position verrouillée.

15. Système d'arme comportant :

- un véhicule (1), notamment un aéronef à voilure tournante ;
- une première unité d'arme (U1) montée sur ledit véhicule (1) ; et
- un système de visée (SV) également monté sur ledit véhicule (1) et susceptible de prendre des images de l'environnement dudit véhicule (1), au moins lors de l'utilisation de ladite première unité d'arme (U1),

**caractérisé en ce qu'**il comporte de plus une seconde unité d'arme (U2) également montée sur ledit véhicule (1), **en ce que** ledit système de visée (SV) est un système du type de celui spécifié sous la revendication 14, et **en ce que** ledit système de visée (SV) est formé de manière à être amené :

- dans ledit mode de visée stabilisé, lorsque l'une (U1) desdites première et seconde unités d'arme (U1, U2) est utilisée ; et
- dans ledit mode de visée fixe, lorsque l'autre (U2) desdites première et seconde unités d'arme (U1, U2) est utilisée.

**Patentansprüche**

1. Aufhänaunasvorrichtung zum Verbinden einer Sichteinrichtung (2) mit der Außenkonstruktion (3) eines Fahrzeugs (1), insbesondere eines Drehflüglers, wobei die Aufhängungsvorrichtung (4) folgende Komponenten aufweist:

- ein erstes und ein zweites Teil (5, 6), die zumindest annähernd die Form von Platten haben und an der Fahrzeugaußenkonstruktion (3) beziehungsweise an der Sichteinrichtung (2) befestigt werden können; und

- Aufnahmemittel (7), die sich zwischen dem ersten und zweiten Teil (5, 6) befinden und einerseits die relativen linearen Verschiebungen zwischen dem ersten und zweiten Teil (5, 6) entlang der drei Bezugsachsen Längs-, Querund Vertikalachse des Fahrzeugs und andererseits die relativen Winkelverdrehungen zwischen dem ersten und zweiten Teil (5, 6) um die drei Bezugsachsen herum aufnehmen können,

**dadurch gekennzeichnet, dass** sie außerdem folgende Komponenten aufweist:

- ein steuerbares Verriegelungssystem (20), mit dem die Aufhängungsvorrichtung (4) in eine der beiden folgenden Positionen gebracht werden kann:

  • eine verriegelte Position, in der das Verriegelungssystem (20) das erste und zweite Teil (5, 6) in einer relativen festgelegten Position zueinander blockiert; und
  • eine entriegelte Position, in der das Verriegelungssystem (20) die relativen Bewegungen zwischen dem ersten und dem zweiten Teil (5, 6) zulässt; und

- Steuervorrichtungen (21), um das Verriegelungssystem (20) betätigen zu können.

2. Vorrichtung gemäß Anspruch 1,
   **dadurch gekennzeichnet, dass** das Verriegelungssystem (20) mindestens zwei Verriegelungsvorrichtungen (M1, M2, M3, M4, M5, M6) aufweist.

3. Vorrichtung gemäß Anspruch 2,
   **dadurch gekennzeichnet, dass** mindestens eine der Verriegelungsvorrichtungen (M1 bis M6) aus folgenden Elementen besteht:

- einem ersten Element (E1 bis E6), das an dem einen (6) der beiden Teile (5, 6) gegenüber dem anderen (5) der beiden Teile (5, 6) befestigt ist;
- einem zweiten Element (F1 bis F6), das zumindest teilweise mit dem anderen Teil (5) verbunden ist und als Gegenstück des ersten Elements dient, um so mit Hilfe des ersten und zweiten Elements eine feste Verbindung zwischen dem ersten und dem zweiten Teil (5, 6) zu erhalten; und
- einem dritten steuerbaren Element (G1 bis G6), das das erste und zweite Element so anordnen kann, dass sie als Gegenstücke funktionieren, um die beiden Teile in die verriegelte Position zu bringen, und das erste und zweite Element voneinander trennen kann, um die beiden Teile in die entriegelte Position zu bringen.

4. Vorrichtung gemäß Anspruch 3,
   **dadurch gekennzeichnet, dass** das erste Element (E1) aus einem Zapfen (23) besteht, das zweite Element (F1) aus einem Zentrierstück (24) besteht, das am anderen Teil (5) gegenüber des Zapfens (23) befestigt ist und ein Zapfenloch (25) aufweist, dessen Form an den Zapfen (23) angepasst ist, und dass das dritte Element (G1) aus einer Vorrichtung (26) besteht, mit der die beiden Teile (5, 6) einander genähert werden können, so dass der Zapfen (23) in das Zapfenfoch (25) eingeführt werden kann.

5. Vorrichtung gemäß Anspruch 3,
   **dadurch gekennzeichnet, dass** das erste Element (E2) aus einer Achsaufnahme (30) besteht, das zweite Element (F2) aus einer beweglichen Achse (31) besteht, die sich mit einer Führung (32), die am anderen Teil (5) befestigt ist, gezielt bewegen lässt, und die in die Achsaufnahme (30) eingeführt werden kann, deren Form an die Achse (31) angepasst ist, und das dritte Element (G2) aus einer Vorrichtung (33) besteht, mit der die bewegliche Achse (31) verschoben werden kann.

6. Vorrichtung gemäß Anspruch 5,
   **dadurch gekennzeichnet, dass** das Verriegelungssystem (20) zwei Verriegelungsvorrichtungen (M2) aufweist, wobei bei einer der beiden die Länge (L) der Achsaufnahme (30), in die die Achse (31) eingeführt werden kann, größer oder gleich dem doppelten Durchmesser (D) der Achse (31) in ihrem kreisförmigen Querschnitt ist.

7. Vorrichtung gemäß Anspruch 5,
   **dadurch gekennzeichnet, dass** das Verriegelungssystem (20) drei ähnliche Verriegelungsvorrichtungen (M2) aufweist, wobei bei jeder Verriegelungsvorrichtung die Länge (L) der Achsaufnahme (30), in die die Achse (31) eingeführt werden kann, kleiner als der doppelte Durchmesser (D) der Achse (31) in ihrem kreisförmigen Querschnitt ist.

8. Vorrichtung gemäß Anspruch 3,
   **dadurch gekennzeichnet, dass** das erste Element (E3) aus einer Kugel (34) besteht, das zweite Element (F3) aus mindestens zwei beweglichen Teilen (35, 36) besteht, die so gestaltet sind, dass sie die Kugel (34) umschließen können, und dass das dritte Element (G3) aus einer Vorrichtung (38) besteht, mit der die beweglichen Teile (35, 36) verschoben werden können.

9. Vorrichtung gemäß Anspruch 3,
   **dadurch gekennzeichnet, dass** das vierte Element (E4) eine Achse (40) aufweist, die an ihrer Außenseite über mindestens eine ringförmige Vertiefung (41) verfügt, dass das zweite Element (F4) aus einem bedienbaren Klemmsystem besteht, das mindestens vier Kugeln (42A, 42B, 42C, 42D, 43A, 43B, 43C, 43D) aufweist, die die Achse (40) umschließen können, indem sie gleichmäßig um die Achse (40) verteilt in deren Vertiefung (41) laufen, und dass das dritte Element (G4) eine Vorrichtung (48) aufweist, mit der das Klemmsystem geöffnet und geschlossen werden kann.

10. Vorrichtung gemäß Anspruch 9,
    **dadurch gekennzeichnet; dass** das Verriegelungssystem (20) zwei ähnliche Verriegelungsvorrichtungen (M4) aufweist, wobei bei beiden Verriegelungsvorrichtungen die Achse (40) über zwei ringförmige Vertiefungen (41) verfügt und das Klemmsystem (F4) acht Kugeln aufweist, die in Gruppen von jeweils vier Kugeln in den zwei Vertiefungen (41) laufen können.

11. Vorrichtung gemäß Anspruch 9,
    **dadurch gekennzeichnet, dass** das Verriegelungssystem (20) drei ähnliche Verriegelungsvorrichtungen (M4) aufweist, wobei bei jeder Verriegelungsvorrichtung die Achse (40) über eine einzige ringförmige Vertiefung (41) verfügt und das Klemmsystem (F4) vier Kugeln aufweist.

12. Vorrichtung gemäß Anspruch 3,
    **dadurch gekennzeichnet, dass** das erste Element (E5) eine Kugel (50) aufweist, dass das zweite Element (F5) ein bedienbares Klemmsystem aufweist, das die Kugel (50) umschließen kann, und dass das dritte Element (G5) eine Vorrichtung (53) aufweist, mit der das Klemmsystem (F5) geöffnet und geschlossen werden kann.

13. Vorrichtung gemäß Anspruch 3,
    **dadurch gekennzeichnet, dass** das erste Element (E6) ein Teil (55) mit einer doppelten Aufnahme (56A, 568) aufweist, dass das zweite Element (F6) ein bedienbares Klemmsystem aufweist, wobei die beiden freien Enden (57A, 57B) der Zange auf der jeweiligen Seite in das doppelte Aufnahmeloch (56A, 56B) greifen können, und dass das dritte Element (G6) eine Vorrichtung (53) aufweist, mit der das Klemmsystem geöffnet und geschlossen werden kann..

14. Zielerfassungssystem eines Fahrzeugs, insbesondere eines Drehflügters, wobei das Zielerfassungssystem (SV) folgende Komponenten aufweist:

    - ein Zielgerät bestehend aus einer Sichteinrichtung (2), mit der Bilder von der Außenumgebung des Fahrzeugs (1) aufgenommen werden können, und einer Einrichtung zur Bilddarstellung, mit dem die Bilder, die mit der Sichteinrichtung (2) aufgenommen werden, angezeigt werden können; und

    - eine Aufhängungsvorrichtung (4), mit der die Sichteinrichtung (2) mit der Außenkonstruktion (3) des Fahrzeugs verbunden werden kann,

    **dadurch gekennzeichnet, dass** es sich bei der Aufhängungsvorrichtung (4) um eine Vorrichtung des Typs handelt, wie sie in einem der Ansprüche 1 bis 13 beschrieben wird, und dass das Zieferfassungssystem (SV) zwei verschiedene Sichtmodi aufweist:

    - einen stabilisierten Sichtmodus, für den die Aufhängungsvorrichtung (4) in die entriegelte Position gebracht wird; und
    - einen fixen Sichtmodus, für den die Aufhängungsvorrichtung (4) in die verriegelte Position gebracht wird.

15. Waffensystem bestehend aus:

    - einem Fahrzeug (1), insbesondere einem Drehflügler,
    - einer ersten Waffeneinheit (U1), die am Fahrzeug (1) angebracht ist; und
    - einem Zielerfassungssystem (SV), das ebenfalls am Fahrzeug (1) angebracht ist, und mit dem Bilder von der Umgebung des Fahrzeugs (1) aufgenommen werden können, zumindest wenn die erste Waffeneinheit (U1) verwendet wird,

    **dadurch gekennzeichnet, dass** es außerdem eine zweite Waffeneinheit (U2) aufweist, die ebenfalls am Fahrzeug (1) angebracht ist, dass das Zielerfassungssystem (SV) ein System des Typs ist, wie es in Anspruch 14 beschrieben wird, und dass das Zielerfassungssystem (SV) so gestaltet ist, dass es:

    - in den stabilisierten Sichtmodus gesetzt werden kann, wenn die eine (U1) der beiden Waffeneinheiten (U1, U2) verwendet wird; und
    - in den fixen Sichtmodus gesetzt werden kann, wenn die andere (U2) der beiden Waffeneinheiten (U1, U2) verwendet wird.

## Claims

1. Suspension device for connecting a sight means (2) to the structure (3) of a vehicle (1), particularly a rotary-wing aircraft, said suspension device (4) comprising:

    - first and second parts (5, 6) shaped at least approximately in the form of plates and capable of being fixed respectively to said structure (3) and to said sight means (2); and

- suspension means (7) which are arranged between said first and second parts (5, 6) and which are capable of absorbing, on the one hand, relative linear displacements of said first and second parts (5, 6) along three reference axes in roll, pitch and yaw of said vehicle and, on the other hand, the relative angular excursions of said first and second parts (5, 6) about said three reference axes,

**characterized in that** it additionally comprises:

- a controllable locking system (20) capable of bringing said suspension device (4) into one of the following two positions:

  • a locked position in which said locking system (20) immobilizes said first and second parts (5, 6) one with respect to the other in a given relative position; and
  • an unlocked position in which said locking system (20) releases said first and second parts (5, 6) to move relative to one another; and

- control means (21) for controlling said locking system (20).

2. Device according to Claim 1,
   **characterized in that** said locking system (20) comprises at least two locking means (M1, M2, M3, M4, M5, M6).

3. Device according to Claim 2,
   **characterized in that** at least one of said locking means (M1 to M6) comprises:

   - a first element (E1 to E6) fixed to one (6) of said first and second parts (5, 6), facing the other (5) of said parts (5, 6);
   - a second element (F1 to F6) at least partially connected to said other part (5) and capable of collaborating with said first element to obtain a fixed connection between said first and second parts (5, 6), via said first and second elements; and
   - a controllable third element (G1 to G6) capable of bringing said first and second elements into collaboration to obtain said locked position, and capable of separating said first and second elements one from the other to obtain said unlocked position.

4. Device according to Claim 3,
   **characterized in that** said first element (E1) comprises a tenon (23), said second element (F1) comprises a centring piece (24) which is fixed to said other part (5) facing said tenon (23) and which comprises a mortise (25) of a shape tailored to said tenon (23), and **in that** said third element (G1) comprises a means (26) capable of bringing said two parts (5, 6) closer together in order to bring said tenon (23) into said mortise (25).

5. Device according to Claim 3,
   **characterized in that** said first element (E2) comprises a housing (30), said second element (F2) comprises a moving pin (31) which can be guided by a guide (32) fixed to said other part (5) and which is capable of entering said housing (30) which has a shape tailored to said pin (31), and said third element (G2) comprises a means (33) of displacing said moving pin (31).

6. Device according to Claim 5,
   caharacterized in that said locking system (20) comprises two locking means (M2), for one of which the length (L) of the part of the housing (30) capable of accommodating said pin (31) is greater than or equal to twice the diameter (D) of said pin (31) which has a circular cross section.

7. Device according to Claim 5,
   **characterized in that** said locking system (20) comprises three similar locking means (M2), for each of which the length (L) of the part of the housing (30) capable of accommodating said pin (31) is less than twice the diameter (D) of said pin (31) which has a circular cross section.

8. Device according to Claim 3,
   **characterized in that** said first element (E3) comprises a sphere (34), said second element (F3) comprises at least two moving parts (35, 36) shaped so as to be able to trap said sphere (34), and **in that** said third element (G3) comprises a means (38) capable of displacing said moving parts (35, 36).

9. Device according to Claim 3,
   **characterized in that** said first element (E4) comprises a pin (40) which has at least one annular groove (41) on its outer face, **in that** said second element (F4) comprises an actuatable clamping system comprising at least four spheres (42A, 42B, 42C, 42D, 43A, 43B, 43C, 43D) capable of trapping said pin (40) by acting in said groove (41), in a uniformly distributed way around the periphery of said pin (40), and **in that** said third element (G4) comprises a means (48) capable of actuating said clamping system.

10. Device according to Claim 9,
    **characterized in that** said locking system (20) comprises two similar locking means (M4), for each of which the pin (40) has two annular grooves (41) and the clamping system (F4) has eight spheres capable of acting in groups of four spheres in said two grooves (41) respectively.

11. Device according to Claim 9,
**characterized in that** said locking system (20) comprises three similar locking means (M4), for each of which the pin (40) has just one annular groove (41) and the clamping system (F4) has four spheres.

12. Device according to Claim 3,
**characterized in that** said first element (E5) comprises a sphere (50), **in that** said second element (F5) comprises an actuatable clamping system capable of trapping said sphere (50), and **in that** said third element (G5) comprises a means (53) capable of actuating said clamping system (F5).

13. Device according to Claim 3,
**characterized in that** said first element (E6) comprises a part (55) which has a double housing (56A, 56B), **in that** said second element (F6) comprises an actuatable clamping system, the two free ends (57A, 57B) of said clamp being capable of acting respectively in said double housing (56A, 56B), and **in that** said third element (G6) comprises a means (53) capable of actuating said clamping system.

14. Sighting system for a vehicle, particularly a rotary-wing aircraft, said sighting system (SV) comprising:

   - a sighting apparatus comprising a sight means (2) capable of taking images of the external environment of said vehicle (1) and a display means capable of displaying the images taken by said sight means (2); and
   - a suspension device (4) allowing said sight means (2) to be connected to the structure (3) of said vehicle,

   **characterized in that** said suspension device (4) is a device of the type specified in any one of Claims 1 to 13, and **in that** said sighting system (SV) has two different sighting modes:

   - a stabilized sighting mode, for which said suspension device (4) is brought into the unlocked position; and
   - a fixed sighting mode, for which said suspension device (4) is brought into the locked position.

15. Weapon system comprising:

   - a vehicle (1), particularly a rotary-wing aircraft;
   - a first weapon unit (U1) mounted on said vehicle (1); and

   - a sighting system (SV) also mounted on said vehicle (1) and capable of taking images of the environment of said vehicle (1), at least during use of said first weapon unit (U1),

   **characterized in that** it additionally comprises a second weapon unit (U2), also mounted on said vehicle (1), and **in that** said sighting system (SV) is a system of the type specified in Claim 14, and **in that** said sighting system (SV) is formed in such a way as to be brought:

   - into said stabilized sighting mode when one (U1) of said first and second weapon units (U1, U2) is used; and
   - into said fixed sighting mode when the other (U2) of said first and second weapon units (U1, U2) is used.

Fig. 1

Fig. 2

EP 1 095 851 B1

Fig. 3

Fig. 4

Fig. 5

Fig. 6

Fig. 7

Fig. 9

Fig. 10

Fig.8

EP 1 095 851 B1